# EUROPEAN PATENT SPECIFICATION

(11) **EP 4 386 354 B1**
(45) Date of publication and mention of the grant of the patent: **01.04.2026**
(21) Application number: 22213600.4
(22) Date of filing: 14.12.2022
(51) Int. Cl.: G01N 11/08, G01N 13/02, G01N 35/10

(54) **DETERMINING PHYSICAL PARAMETERS OF A LIQUID WITH SIMULATION**
BESTIMMUNG PHYSIKALISCHER PARAMETER EINER FLÜSSIGKEIT MIT SIMULATION
DÉTERMINATION DE PARAMÈTRES PHYSIQUES D'UN LIQUIDE AVEC SIMULATION

(43) Date of publication of application: 19.06.2024
(73) Proprietor: Tecan Trading AG, 8708 Männedorf (CH)
(72) Inventor: KELLER, Michael, 8494 Bauma (CH); GEIGES, Thomas, 8708 Männedorf (CH); VILAJ, Volfgang, 8707 Uetikon am See (CH)
(74) Representative: Sykora & König Patentanwälte PartG mbB

(56) References cited:
- EP-A1- 1 745 851
- US-A1- 2007 020 763
- US-A1- 2013 045 498
- US-A1- 2022 026 455
- US-A1- 2022 196 696
- US-B2- 7 964 160

## Description

### FIELD OF THE INVENTION

The invention relates to a method, a computer program, a computer-readable medium and a control device for determining physical parameters of a liquid. Furthermore, the method relates to a laboratory automation device.

### BACKGROUND OF THE INVENTION

Laboratory automation devices are used for automating tasks of a laboratory assistant, which, for example, tests a patient for specific diseases. Usually, a sample of the patient's blood, urine, stool, etc. is taken and analysed by means of a biochemical procedure. Such a procedure consists in various operations like adding substances, incubating, separating, etc. and a measurement process which quantitatively or qualitatively measures the amount or presence of a substance indicating the specific disease.

Sometimes laboratory automation devices need to deal with unknown liquids or with liquids such as blood, which have varying physical properties such as density and viscosity. In these cases, it may be that the user of the laboratory automation device wants to know the properties of the liquid. It also may be that the physical properties have to be determined to calculate and set the liquid class parameters. A liquid class for a specific liquid is used for controlling the laboratory automation device, when the laboratory automation device processes this liquid.

US 7 964 160 B1 describes a method for accepting and rejecting pipetted liquid samples. A liquid is aspirated and dispensed with the pipette of a laboratory automation device and a pressure curve is measured. A simulated curve, which is simulated based on physical properties of the laboratory automation device and the liquid, is fitted to the measured curve. During the fitting, parameters of the simulated curve are adjusted by comparing the measured curve and the simulated curve.

EP 1 745 851 A1 describes a method for selecting pipetting parameters of a laboratory automation device. An unknown liquid is set into oscillations in the pipette of the laboratory automation device and a pressure curve is measured. The pressure curve is compared with typical pressure curves of known liquids. When a typical pressure curve is identified, the pipetting parameters of the respective liquid are selected for the unknown liquid.

### DESCRIPTION OF THE INVENTION

It is an objective of the invention to automate and simplify the determination of physical parameters of liquids used in the context of laboratory automation.

This objective is achieved by the subject-matter of the independent claims. Further exemplary embodiments are evident from the dependent claims and the following description.

A first aspect of the invention relates to a method for determining physical parameters of an unknown liquid to be aspirated and/or dispensed by a laboratory automation device. The method may be performed automatically by the laboratory automation device and in particular a control device of the laboratory automation device. A control device of a laboratory automation device, which control device is adapted for performing the method, also is a further aspect of the invention.

The method comprises: determining physical parameters of the pipette, the physical parameters including geometric parameters of the pipette, which at least include a tip radius of an orifice of the pipette. The geometric parameters define a geometric shape of the pipette, in particular from the tip section of the pipette. Small deviations of the geometric shape of the pipette section may substantially influence the pressure curve, from which the physical parameters of an unknown liquid are determined as described below.

The tip radius may be the smallest radius of the orifice of the pipette.

According to an embodiment of the invention, the geometric parameters of the pipette comprise additionally at least one of: a geometric model of at least one conical section modelling an interior surface the pipette; an opening angle of a conical section ending in the orifice; a second radius at another end of the conical section; a distance of the other end to the orifice; an opening angle and/or radii and/or distances of ends of further conical sections.

The physical parameters of the pipette may be determined by receiving corresponding measurements values, which for example may be encoded in a computer readable code on the pipette and/or its container. The computer-readable code may contain the physical parameters or the computer-readable code may guide to a database and/or server, which stores the physical parameters. As a further option, the physical parameter of the pipette may be determined by aspirating and/or dispensing a known liquid with known physical liquid parameters and evaluating a corresponding pressure curve.

According to an embodiment of the invention, the method further comprises: aspirating and/or dispensing a known liquid with a pipette and measuring a first measured pressure curve in the pipette during aspirating and/or dispensing, wherein the physical parameters of the pipette are determined by minimizing an objective function depending on a difference between a simulated pressure curve and the first measured pressure curve, wherein the simulated pressure curve simulates a pressure in the pipette during aspirating and/or dispensing and is calculated based on a physical model of the laboratory automation device including the physical parameters of the pipette and the known physical parameters of the known liquid, wherein the physical parameters of the pipette are varied to minimize the objective function.

The method further comprises: aspirating and/or dispensing the unknown liquid with the pipette or an equal pipette and measuring a measured pressure curve during aspirating and/or dispensing. In the case, when a first pressure curve is measured for the known liquid, the pressure curve measured during aspirating and/or dispensing the unknown liquid is a second pressure curve.

The two aspirating and/or dispensing steps may be performed in arbitrary order. The known liquid is a liquid, for which the physical properties, such as density, viscosity, surface tension and/or wetting angle, etc., are known. For example, the known liquid may be water, for which the physical parameters are known very well. The unknown liquid is a liquid, for which the physical properties are not known.

In the second step, instead of the pipette, an equal pipette, which may be an equally shaped and/or equally manufactured pipette, may be used. In such a way, in the second step, also an unused pipette, which has not yet been wetted, can be used. In the following, when the pipette is mentioned, also the equal pipette is considered and meant.

In both method steps, the pipette may be picked up with the laboratory automation device. For example, a pipetting arm may take the pipette. The pipette may be disposable. A disposable pipette may be called "pipette tip", however, in the following, the end of the pipette with the orifices will be called pipette tip.

Both liquids may be provided in sample containers. The pipette may be lowered into the respective sample container with the laboratory automation device, the respective sample container containing the known liquid or the unknown liquid.

The first and second measured pressure curves may be measured with a pressure sensor of the laboratory automation device, which pressure sensor may be connected to the interior of the pipette. For example, the pressure sensor may be a part of the pipetting arm or the pump generating the pressure in the pipette.

In the one or more simulation steps, the relevant parts of the laboratory automation device, such as the interior of the pipette and the cavities, which interior is connected to the pipette, together with the known liquid and the unknown liquid, respectively, are simulated. This may be done by a controller of the laboratory automation device or any other computing device in data communication with the laboratory automation device. In a simulation step, which is performed, when the first pressure curve has been measured, the physical parameters of the pipette are determined with the simulation by adjusting the simulated curve to the first measured pressure curve. The known physical parameters of the known liquid are used as fixed parameters during this first step of the simulation and optimization. The adjustment of the simulated and measured curve may be achieved by an iterative optimization process. The unknown physical parameters of the pipette are varied, for example with a Monte Carlo method, a genetic algorithm, a steepest descent method. In every iteration step, the unknown physical parameters of the pipette are varied, such that the objective function is minimized.

The method further comprises: determining the physical parameters of the liquid by minimizing an or the objective function depending on a difference between a simulated pressure curve and the (second) measured pressure curve, wherein the simulated pressure curve simulates a pressure in the pipette during aspirating and/or dispensing the unknown liquid and is calculated based on a or the physical model of the laboratory automation device including the physical parameters of the pipette, wherein the physical parameters of the unknown liquid are varied to minimize the objective function.

In this simulation step, physical parameters of the unknown liquid are determined with the simulation by adjusting the simulated curve to the (second) measured pressure curve. The now known physical parameters of the pipette are used as fixed parameters during this simulation step of the simulation and optimization. The adjustment of the simulated and measured curve may be achieved by an iterative optimization process, which may be the same as in the first simulation step. The unknown physical parameters of the liquid are varied, for example with a Monte Carlo method, a genetic algorithm, a steepest descent method. In every iteration step, the unknown physical parameters of the liquid are varied, such that the objective function is minimized.

In both simulation steps, the relevant parts of the laboratory automation device are simulated during aspiration and optionally dispensing (see below). The relevant parts of the laboratory automation device and/or the model of the laboratory automation device used in the simulation may be the pipette, together with its orifice and/or the connected pressure system, such as hoses and pipes and the pump. Also, the liquid and the gas (usually air) inside these components are simulated:
The physical model used in the simulation may comprise differential equations, which are solved during the simulation. The differentiable equation may model the properties of components over time. For example, the volume of the liquid and of the gas inside the components may be modelled as linear interconnected, oscillating masses.

The physical parameters of the pipette and of the liquid are parameters of the differential equations, which are kept fixed during one iteration step. The respective physical parameters are varied as described above between two iterations steps and a new simulation is performed.

According to an embodiment of the invention, the physical parameters of the pipette additionally comprise a filter resistance. The filter resistance may be a flow resistance of one or more filters inside the pipette and/or in a tip adapter, which may belong to laboratory automation device.

As already mentioned, further physical parameters may be considered, such as a shape of a conical and/or cylindrical part of the pipette, the diameter and/or radius of the cylindrical part, of the pipette tip, a tip opening angle of the pipette tip and/or its orifice, etc. The physical parameters, however, may be kept fixed and need not be optimized during the first simulation step. The same applies to physical parameters of further parts of the laboratory automation device. All these physical parameters may be provided as fixed values.

According to an embodiment of the invention, the physical parameters of the liquid comprise at least one of a density, a viscosity, a surface tension and a wetting angle. It may be that one or some of these parameters are provided as fixed values and are not varied during the simulation. For example, solely the density and viscosity may be determined. However, it also may be that all of these physical parameters are determined in the second simulation step.

According to an embodiment of the invention, the method further comprises: aspirating and dispensing the known liquid and the unknown liquid with the laboratory automation device and measuring the first pressure curve and the second pressure curve during aspirating and dispensing. In this case, the simulated pressure curve simulates a pressure in the pipette during aspirating and dispensing and the objective function depends on the difference between the simulated pressure curve and the measured pressure curve during aspirating and dispensing.

For increasing the accuracy, both the aspirating and the dispensing of the respective liquid is simulated. The physical parameters are optimized with respect to aspiration and dispensing. In this case, also a receding wetting angle may be determined.

According to an embodiment of the invention, the objective function depends on pressure differences of the measured pressure curve and the simulated pressure curve at equal time points. At selected time points of the two curves, the pressure difference is calculated. The objective function is then calculated from these differences. For example, the objective function may be the root mean square of these differences and/or the sum of these differences. In the latter case, the objective function may be the integral over the difference between the simulated and measured pressure curve.

The time points may be selected to be within specific intervals of the curves. For example, an interval may be determined to start at the beginning of aspiration and to end, when the pressure curve has settled, i.e. stays on a constant value. A further interval may be determined to start at the beginning of dispensing and to end, when the pressure curve has settled.

According to an embodiment of the invention, the physical properties of the pipette are determined in one multidimensional optimization, in which the physical properties of the pipette are varied simultaneously. In every iteration step, all physical parameters of the pipette, which should be determined, are varied.

According to an embodiment of the invention, the physical properties of the unknown liquid are determined in one multidimensional optimization, in which the physical properties of the pipette are varied simultaneously. In every iteration step, all physical parameters of the unknown liquid, which should be determined, are varied.

According to an embodiment of the invention, the physical properties of the unknown liquid are determined in a multistep optimization, in which the physical properties of the pipette are varied in separate groups. Each group may be composed of one or more parameters, each parameter being or associated with a physical property. One group may be density and viscosity. Then the groups are optimized one after the other. This may decrease the computational demand of the simulations. According to an embodiment of the invention, the known liquid is aspirated with a first pipette and the unknown liquid is aspirated with a second, equal pipette. The equal pipette may be a pipette equally shaped as the (first) pipette. As already mentioned, the pressure curves may be measured for different pipettes, which, however, in a sense are equal. Equal may mean that the pipette and the equal pipette are picked from the same pipette container. Equal also may mean that the pipette and the equal pipette are manufactured with the same mold and in particular the same cavity of the mold. Usually, pipettes made with the same mold, for example an injection mold, are sorted into the same pipette containers. This may ensure that the pipettes have nearly the same shapes and in particular nearly the same physical parameters.

According to an embodiment of the invention, at least one initial value for the physical parameters of the unknown liquid are determined from at least one characteristic feature of the (second) measured pressure curve. The initial values for the physical parameter, which are used for starting the optimization, may be determined from characteristic features of the (second) measured pressure curve. In general, a characteristic feature may be a peak, the height and/or width of a peak, an inclination of a substantially straight curve piece, a pressure difference between two substantially straight curve pieces, etc.

In particular, a characteristic feature may be a height and/or direction of a peak at a beginning of the aspiration. This is indicative of a surface tension and wetting angle of the liquid.

A characteristic feature also may be a height and/or duration of a pressure change at an end of the aspiration. This is indicative of a viscosity of the liquid.

According to an embodiment of the invention, the pipette and/or the equal pipette is unused and has not been wetted with a liquid before. A wetting of the interior surface of a pipette before the aspiration may influence the determination of physical parameters, such as the surface tension, volatility, wetting angle and viscosity. Starting with an unused pipette will increase the accuracy of these parameters.

The determined physical parameters of the liquid may be output to a user of the laboratory automation device, for example for planning an assay procedure with the liquid.

According to an embodiment of the invention, the method further comprises: storing the physical parameters in a liquid class for the liquid; and optionally performing an assay procedure with the liquid using the liquid class. A predefined liquid class may be selected and the physical parameters there may be adjusted to the determined values. Also a new liquid class may be defined with the determined values.

It also may be that a liquid class for the liquid is stored in the control device. A liquid class is a data structure used by the control device and/or the laboratory automation device for handling the liquid. For example, the liquid class sets, how fast the liquid is aspirated and dispensed during specific steps of an assay procedure. Another example for a parameter in the liquid class is an accuracy correction or the a wait time after aspiration. An assay procedure may be a predefined set of operations that are automatically performed by the laboratory automation device for processing the liquid.

A further aspect of the invention relates to a computer program for determining physical parameters of a liquid, which computer program, when being executed by a processor, is adapted to carry out the steps of the method as described above and below. The computer program may be executed in a computing device, such as a control device of the laboratory automation device and/or a PC, which may be communicatively interconnected with the laboratory automation device. It also is possible that the method is performed by an embedded microcontroller of the laboratory automation device.

A further aspect of the invention relates to a computer-readable medium, in which such a computer program is stored. A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet and/or a cloud storage, which allows downloading a program code. In general, the computer-readable medium may be a non-transitory or transitory medium.

A further aspect of the invention relates to a laboratory automation device.

According to an embodiment of the invention, the laboratory automation device comprises a pipetting arm for carrying a pipette; a pump for changing a pressure in a volume connected to the pipette for aspirating and dispensing a liquid medium in the pipette; a pressure sensor for pressure measurements in the volume connected to the pipette and a control device for controlling the pump and the pipetting arm and for receiving a pressure signal from the pressure sensor, wherein the control device is adapted for performing the method as described above and below.

It has to be understood that features of the method as described in the above and in the following may be features of the control device, the computer program and the computer-readable medium as described in the above and in the following and vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a laboratory automation device according to an embodiment of the invention.
Fig. 2 shows a flow diagram illustrating a method according to an embodiment of the invention.
Figs. 3 and 4 show diagrams with pressure curves produced by the method of Fig. 2.
Fig. 5 shows a diagram for describing an objective function used in the method of Fig. 2.
Fig. 6 shows a diagram with values of the objective function generated in the method of Fig. 2.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

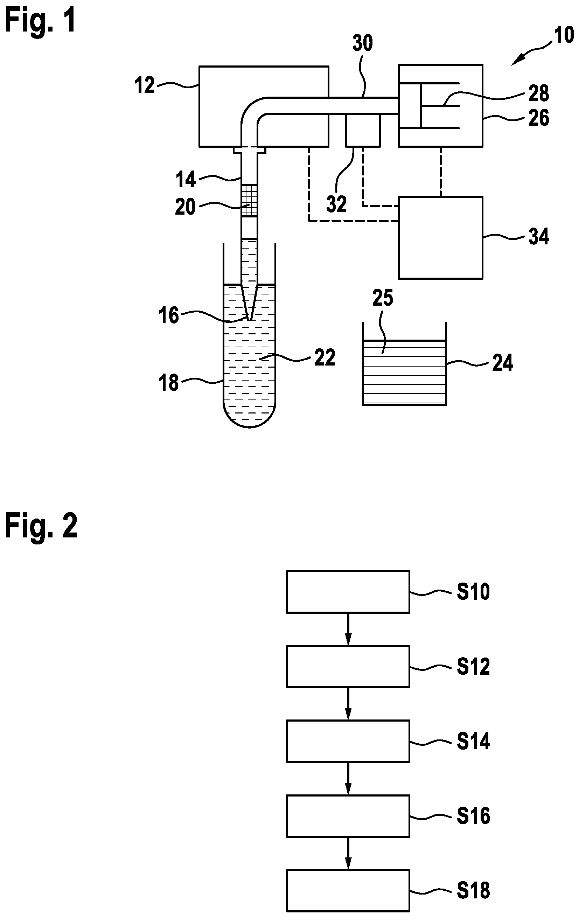

Fig. 1 schematically shows a laboratory automation device 10, which comprises an automatically movable pipetting arm 12 to which a pipette 14 is attached. As shown in Fig. 1, the pipette tip 16 of the pipette 14 may be lowered into a sample container 18 via the movable pipetting arm 12.

The pipetting arm 12 may move the pipette 14 and the pipette tip 16 in three dimensions, may lower the pipette tip 16 into the sample container 18 and may retract the pipette tip 16 therefrom. The pipette 14 is a disposable pipette and the pipetting arm 12 is adapted for picking up the pipette 14 and discarding the pipette 14.

The pipette 14 contains a filter 20, which prevents entering substances from the pipette 14 into the remaining parts of the laboratory automation device 10.

In the sample container 18, a liquid 22 is contained. When the pipette tip 16 is immersed in the liquid in the sample container 18, the liquid can be aspirated into the pipette 14.

Fig. 1 also shows a further sample container 24 containing a further liquid 25. The liquid 25 is a known liquid with known physical parameters. The liquid 22 is an unknown liquid for which the physical parameters are determined with the method described herein.

The laboratory automation device 10 comprises a pump 26, which is connected via a hose 30 with the pipette 14. With the pump 26, a pressure may be applied to the hose 30 and to the pipette 14, or more general to a volume 30 connected with the pipette 14, which causes the pipette 14 to aspirate or dispense the liquid 22 or air. For example, the pump 26 comprises a plunger 28, which is moved for generating underpressure and overpressure in the hose 30 and the pipette 14. Any other kind of pumps, e.g. peristaltic pumps, or in general any source of vacuum and pressure may be used. The source of vacuum and pressure may be controlled via valves.

A pressure sensor 32, which may be attached to the hose 30 and/or the pipette 14, is adapted for measuring a pressure in the hose 30 and/or the pipette 14.

A control device 34 of the laboratory automation device10, which may be a part of the laboratory automation device 10 or connected thereto, may control the pipetting arm 12, the pump 26 and may receive a pressure signal from the pressure sensor 32.

Fig. 2 shows a flow diagram for a method for determining physical parameters of the unknown liquid 22. The method is performed by the controller 34, which performs the measurements with the sensor 32 and which controls the movement of the pipetting arm 12 and the pump 26 by generating corresponding control demands.

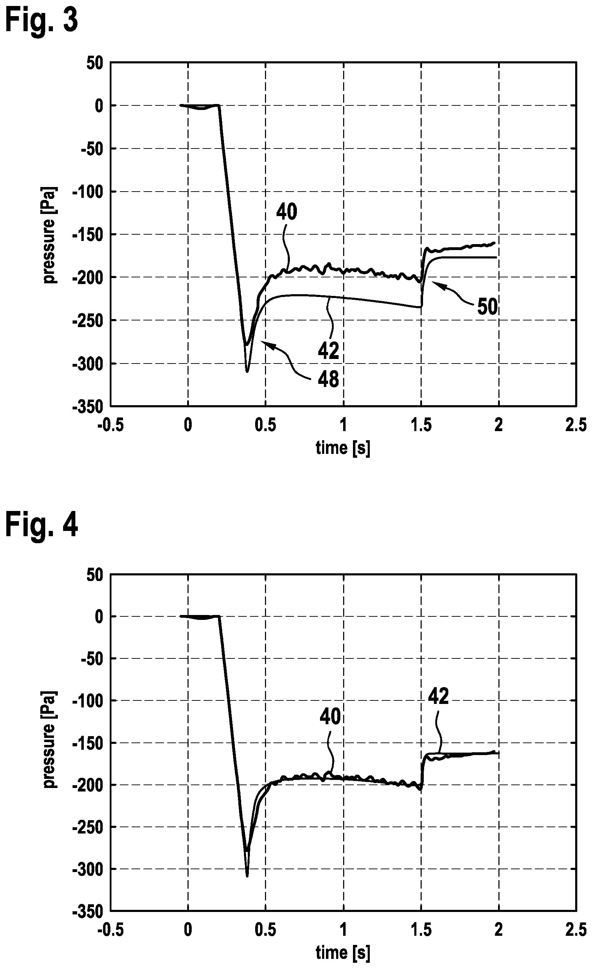

In step S10, the pipetting arm 12 picks up the pipette 14 and lowers the pipette 14 into the known liquid 25. The known liquid 25 is aspirated and/or dispensed with the pipette 14 and during aspirating and/or dispensing, a first measured pressure curve 40 in the pipette 14 is measured. Such a pressure curve is shown in Fig. 3 and 4.

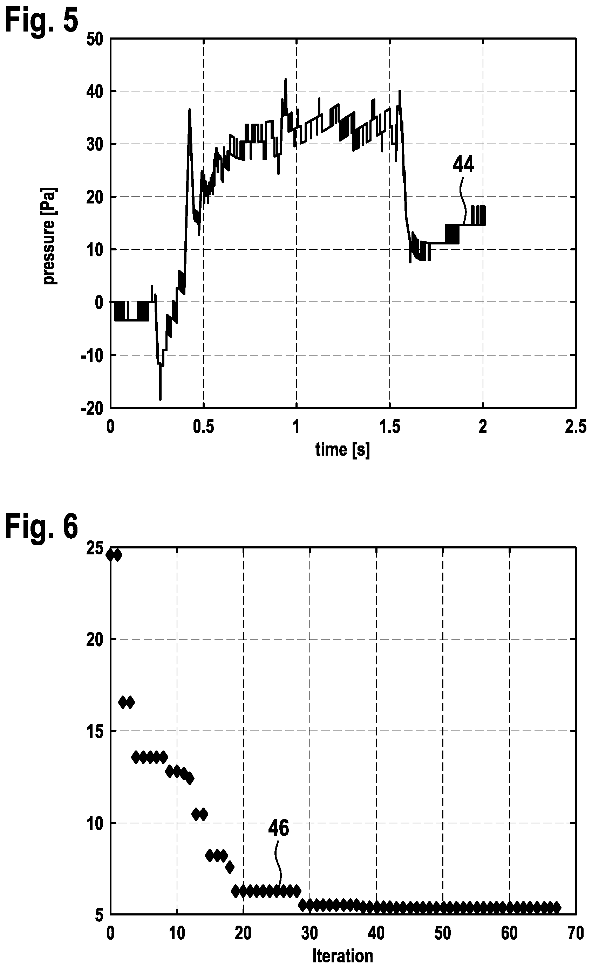

In step S12, physical parameters of the pipette 14 are determined by minimizing an objective function depending on a difference 44 (see Fig. 5) between a simulated pressure curve 42 and the first measured pressure curve 40. Fig. 6 shows values 46 of the objective function at different iterations (see below).

The simulated pressure curve 42 simulates a pressure in the pipette 14 during aspirating and/or dispensing and is calculated based on a physical model of the laboratory automation device 10 including the physical parameters of the pipette 14 and the known physical parameters of the known liquid 25.

The simulated pressure curve 42 is adjusted to the measured pressure curve 40 by adjusting parameters of the physical model, until the simulated pressure curve 42 is (nearly) equal to the measured pressure curve 40.

The optimization process of adjusting the simulated pressure curve 42 to the measured pressure curve 40 is performed iteratively. Starting with a set of physical parameters, the simulated pressure curve 42 is calculated and compared to the measured pressure curve 40. After that in a next iteration step, the physical parameters are varied and the simulated pressure curve 42 is calculated again. In such a way, the physical parameters encoded in the model are varied to minimize the objective function.

Fig. 3 shows a measured pressure curve 40 and a simulated pressure curve 42 at the beginning of the optimization process. The simulated pressure curve 42 deviates from the measured pressure curve 40. Fig. 4 shows the measured pressure curve 40 and a simulated pressure curve 42 at the end of the optimization process. The simulated pressure curve 42 is nearly equal to the measured pressure curve 40.

For determining a new set of physical parameters, different methods are possible, such as a steepest descent method, a genetic algorithm or a Monte Carlo method.

The measure for the difference between the simulated pressure curve 42 and the measured pressure curve 40 is an objective function. The objective function depends on a pressure difference function of the measured pressure curve 40 and the simulated pressure curve 42. Such a difference function 44 is shown in Fig. 5. A pressure difference is calculated at equal time points of the measured pressure curve 40 and the simulated pressure curve 42.

The objective function is determined from the difference function 44. For example, the sum or mean or root mean square of the function values of the difference function 44 may be used. For example, the objective function may be the root mean square of the values of the difference function.

For calculating the objective function, the difference function 44 may be restricted to specific time periods, such as the timer period between start and end of the aspiration process and/or to the time period between start and end of the dispensing process. The respective process may begin, when pressure starts to change actively, and may end, when the pressure changes have been settled. Such a beginning and/or such an end may be determined from the measured pressure curve 40, before calculation of the objective function.

Fig. 6 shows the values 46 of the objective function over several iterations. It can be seen that the objective function becomes smaller and smaller until a plateau is reached, i.e. the objective function has reached a minimum. For example, the optimization may stop, when a change of the objective function has become smaller than a threshold.

In step S12, the physical parameters of the pipette 14 are determined by keeping the physical parameters of the known liquid 25 fixed. Solely the physical parameters of the pipette 14, which may comprise the tip radius and a filter resistance, are varied.

The now determined physical parameters of the pipette 14 are then used in the following method step to determine the physical parameters of the unknown liquid. The physical parameters of the unknown liquid 22 as well as the physical parameters of the known liquid 25 may comprise a density, a viscosity, a surface tension and/or a wetting angle.

In step S14, the pipetting arm 12 disposes the pipette 14 and picks up an equal pipette 14. The equal pipette may be a pipette equally shaped as the pipette 14. For example, the pipette 14 and the equal pipette are picked from the same pipette container and/or manufactured with the same tool.

Alternatively, step S14 is performed with the same pipette 14. For improving the accuracy of the determination of physical parameters, it may be beneficial when the pipette 14 and/or the equal pipette 14 is unused and has not been wetted with a liquid 22, 25 before.

The same or the equal pipette 14 is lowered into the unknown liquid 22. The known liquid 22 is aspirated and optionally dispensed with the pipette 14 and during aspirating and/or dispensing, a second measured pressure curve 40 in the pipette 14 is measured.

In step S16, the physical parameters of the unknown liquid 22 are determined by minimizing the objective function depending on a difference 44 between a simulated pressure curve and the second measured pressure curve 40. The simulation may be performed with the same physical model and with the same objective function. However, in step S16, the physical parameters of the unknown liquid 22 are varied to minimize the objective function and the physical parameters of the pipette 14 are kept fixed.

It may be that in step S16, the physical properties of the unknown liquid 22 are determined in one multidimensional optimization, in which the physical properties of the pipette 14 are varied simultaneously. It also may be that the physical properties of the unknown liquid 22 are determined in a multistep optimization, in which the physical properties of the pipette 14 are varied in separate groups. Such groups may be density and viscosity as well as wetting angle and surface tension.

As a further option, during the optimization processes in step S16, the initial values for the physical parameters may be determined from at least one characteristic feature 48, 50 of the second measured pressure curve 40. Some characteristic features of a measured pressure curve are indicative of estimates of the physical parameters. For example, the height, shape and/or direction (up or down) of the peak 48 (see Fig. 3) at a beginning of the aspiration process is indicative of the density, surface tension and the sign of the wetting angle. Furthermore, the height and/or duration of a pressure change 50 at the end of the aspiration process is indicative of the viscosity.

Such characteristic features 48, 50 may be automatically determined from the measured pressure curve 40, initial values for at least some of the physical parameters of the liquid may be determined therefrom and input into the simulation at the beginning of the iterations.

The physical parameters, which have been determined for the unknown liquid 22, may be displayed on a display of the laboratory automation device 10 and/or may be used further for programming the laboratory automation device 10 and/or for performing an assay procedure with the unknown liquid 22.

In optional step S18, the physical parameters of the unknown liquid 22 are stored in a liquid class for the unknown liquid 22. A liquid class is a data structure, which is used by the laboratory automation device 10 for handling the corresponding liquid. The liquid class contains the physical parameters of the liquid, which are necessary for controlling the handling of the corresponding liquid. The laboratory automation device 10 may then perform an assay procedure with the unknown liquid 22 using the liquid class.

As a further possibility, steps S10 and S12 are omitted and the physical parameters of the pipette are provided in another way. For example, the physical parameters and in particular the geometric parameters are encoded in a computer readable code, such as a bar code, on the pipette 14 and/or a container containing the pipette14 from which it is picked up. The computer readable code also may contain a link, such that the physical parameters can be queried from a server. The laboratory automation device 10 then may automatically read the computer readable code and may determine the physical parameters in this way, before step S14.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or control device or other unit, such as an FPGA, may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS AND NOMENCLATURE

- 10: laboratory automation device
- 12: pipetting arm
- 14: pipette
- 16: pipette tip
- 18: sample container
- 20: filter
- 22: unknown liquid
- 24: further sample container
- 25: known liquid
- 26: pump
- 28: plunger
- 30: hose / volume
- 32: pressure sensor
- 34: control device
- 40: measured pressure curve
- 42: simulated pressure curve
- 44: difference function
- 46: objective function value
- 48: peak
- 50: pressure change

## Claims

1. A method for determining physical parameters of an unknown liquid (22) to be aspirated and/or dispensed by a laboratory automation device (10), the method comprising:
aspirating and/or dispensing a known liquid (25) with a pipette (14) and measuring a first measured pressure curve (40) in the pipette (14) during aspirating and/or dispensing;
determining physical parameters of the pipette (14), the physical parameters including geometric parameters of the pipette (14), which at least include a tip radius of an orifice of the pipette (15) wherein the physical parameters of the pipette (14) are determined by minimizing an objective function depending on a difference (44) between a simulated pressure curve (42) and the first measured pressure curve (40), wherein the simulated pressure curve (42) simulates a pressure in the pipette (14) during aspirating and/or dispensing and is calculated based on a physical model of the laboratory automation device (10) including the physical parameters of the pipette (14) and the known physical parameters of the known liquid (25), wherein the physical parameters of the pipette (14) are varied to minimize the objective function;
aspirating and/or dispensing the unknown liquid (22) with a pipette (14) of the laboratory automation device and measuring a second measured pressure curve (40) in the pipette (14) during aspirating and/or dispensing;
determining the physical parameters of the unknown liquid (22) by minimizing the objective function depending on a difference (44) between a simulated pressure curve and the second measured pressure curve, wherein the simulated pressure curve (42) simulates a pressure in the pipette (14) during aspirating and/or dispensing and is calculated based on the physical model of the laboratory automation device (10) including the physical parameters of the pipette (14), wherein the physical parameters of the unknown liquid (22) are varied to minimize the objective function.

2. The method of claim 1,
wherein the known liquid (25) is aspirated with a first pipette (14) and the the unknown liquid (22) is aspirated with a second, equal pipette;
wherein the equal pipette is a pipette equally shaped as the pipette (14); and/or
wherein the pipette (14) and the equal pipette are picked from the same pipette container; and/or
wherein the pipette (14) and the equal pipette are manufactured with the same mold.

3. The method of one of the previous claims,
wherein the geometric parameters of the pipette comprise additionally at least one of: a geometric model of at least one conical section modelling an interior surface the pipette (14); an opening angle of a conical section ending in the orifice; a second radius at another end of the conical section; a distance of the other end to the orifice; an opening angle and/or radii and/or distances of ends of further conical sections.

4. The method of one of the previous claims,
wherein the physical parameters of the pipette (14) additionally comprise a filter resistance; /and/or
wherein the physical parameters of the unknown liquid (22) comprise at least one of a density, a viscosity, a surface tension and a wetting angle.

5. The method of one of the previous claims, further comprising:
aspirating and dispensing the unknown liquid (22) with the laboratory automation device (10) and measuring the second measured pressure curve (40) during aspirating and dispensing;
wherein the simulated pressure curve (42) simulates a pressure in the pipette (14) during aspirating and dispensing;
wherein the objective function depends on the difference (44) between the simulated pressure curve (42) and the second measured pressure curve (40) during aspirating and dispensing.

6. The method of one of the previous claims,
wherein the objective function depends on pressure differences of the measured pressure curve (40) and the simulated pressure curve (42) at equal time points.

7. The method of one of the previous claims,
wherein the physical properties of the unknown liquid (22) are determined in one multidimensional optimization, in which the physical properties of the pipette (14) are varied simultaneously; or
wherein the physical properties of the unknown liquid (22) are determined in a multistep optimization, in which the physical properties of the pipette (14) are varied in separate groups of one or more parameters.

8. The method of one of the previous claims,
wherein at least one initial value for the physical parameters are determined from at least one characteristic feature (48, 50) of the second measured pressure curve (40);
wherein the at least one characteristic feature (48, 50) includes:
a height and/or direction of a peak at a beginning of the aspiration;
a height and/or duration of a pressure change at an end of the aspiration.

9. The method of one of the previous claims,
wherein the pipette (14) is unused and has not been wetted with a liquid (22, 25) before.

10. The method of one of the preceding claims, further comprising:
storing the physical parameters of the unknown liquid (22) in a liquid class for the unknown liquid;
performing an assay procedure with the unknown liquid (22) using the liquid class.

11. A computer program for determining physical parameters of an unknown liquid, which computer program, when being executed by a processor and in a control device (34) of a laboratory automation device (10), is adapted to carry out the steps of the method of one of the previous claims.

12. A computer-readable medium, in which a computer program according to claim 11 is stored.

13. A control device (34) of a laboratory automation device (10) adapted for performing the method of one of claims 1 to 12.

14. A laboratory automation device (10), comprising:
a pipetting arm (12) for carrying a pipette (14);
a pump (26) for changing a pressure in a volume (30) connected to the pipette (14);
a pressure sensor (32) for pressure measurements in the volume (30) connected to the pipette (14);
a control device (34) for controlling the pump (26) and the pipetting arm (12) and for receiving a pressure signal from the pressure sensor (32);
wherein the control device (34) is according to claim 13.

## Patentansprüche

1. Verfahren zum Bestimmen physikalischer Parameter einer unbekannten Flüssigkeit (22), die durch eine Laborautomatisierungsvorrichtung (10) angesaugt und/oder abgegeben werden soll, wobei das Verfahren umfasst:
Ansaugen und/oder Abgeben einer bekannten Flüssigkeit (25) mit einer Pipette (14) und Messen einer ersten gemessenen Druckkurve (40) in der Pipette (14) während des Ansaugens und/oder Abgebens;
Bestimmen physikalischer Parameter der Pipette (14), wobei die physikalischen Parameter geometrische Parameter der Pipette (14) umfassen, die mindestens einen Spitzenradius einer Öffnung der Pipette (15) umfassen, wobei die physikalischen Parameter der Pipette (14) durch Minimieren einer Zielfunktion in Abhängigkeit von einer Differenz (44) zwischen einer simulierten Druckkurve (42) und der ersten gemessenen Druckkurve (40) bestimmt werden, wobei die simulierte Druckkurve (42) einen Druck in der Pipette (14) während des Ansaugens und/oder Dosierens simuliert und auf der Grundlage eines physikalischen Modells der Laborautomatisierungsvorrichtung (10), das die physikalischen Parameter der Pipette (14) und die bekannten physikalischen Parameter der bekannten Flüssigkeit (25) umfasst, berechnet wird, wobei die physikalischen Parameter der Pipette (14) variiert werden, um die Zielfunktion zu minimieren;
Ansaugen und/oder Abgeben der unbekannten Flüssigkeit (22) mit einer Pipette (14) der Laborautomatisierungsvorrichtung und Messen einer zweiten gemessenen Druckkurve (40) in der Pipette (14) während des Ansaugens und/oder Abgebens;
Bestimmen der physikalischen Parameter der unbekannten Flüssigkeit (22) durch Minimieren der Zielfunktion in Abhängigkeit von einer Differenz (44) zwischen einer simulierten Druckkurve und der zweiten gemessenen Druckkurve, wobei die simulierte Druckkurve (42) einen Druck in der Pipette (14) während des Ansaugens und/oder Abgebens simuliert und auf der Grundlage des physikalischen Modells der Laborautomatisierungsvorrichtung (10), das die physikalischen Parameter der Pipette (14) umfasst, berechnet wird, wobei die physikalischen Parameter der unbekannten Flüssigkeit (22) variiert werden, um die Zielfunktion zu minimieren.

2. Verfahren nach Anspruch 1,
wobei die bekannte Flüssigkeit (25) mit einer ersten Pipette (14) angesaugt wird und die unbekannte Flüssigkeit (22) mit einer zweiten, gleichen Pipette angesaugt wird;
wobei die gleiche Pipette eine Pipette ist, die die gleiche Form wie die Pipette (14) aufweist;
und/oder
wobei die Pipette (14) und die gleiche Pipette aus demselben Pipettenbehälter entnommen werden; und/oder
wobei die Pipette (14) und die gleiche Pipette mit demselben Formwerkzeug hergestellt wurden.

3. Verfahren nach einem der vorangehenden Ansprüche,
wobei die geometrischen Parameter der Pipette ferner mindestens eines umfassen von einem geometrisches Modell mindestens eines konischen Abschnitts, der eine Innenfläche der Pipette (14) modelliert; einem Öffnungswinkel eines konischen Abschnitts, der in der Öffnung endet; einem zweiten Radius an einem anderen Ende des konischen Abschnitts; einer Distanz des anderen Endes zu der Öffnung; einem Öffnungswinkel und/oder Radien und/oder Distanzen von Enden weiterer konischer Abschnitte.

4. Verfahren nach einem der vorangehenden Ansprüche,
wobei die physikalischen Parameter der Pipette (14) ferner einen Filterwiderstand umfassen; und/oder
wobei die physikalischen Parameter der unbekannten Flüssigkeit (22) mindestens einen von einer Dichte, einer Viskosität, einer Oberflächenspannung und einem Benetzungswinkel umfassen.

5. Verfahren nach einem der vorangehenden Ansprüche, des Weiteren umfassend:
Ansaugen und Abgeben der unbekannten Flüssigkeit (22) mit der Laborautomatisierungsvorrichtung (10) und Messen der zweiten gemessenen Druckkurve (40) während des Ansaugens und Abgebens;
wobei die simulierte Druckkurve (42) einen Druck in der Pipette (14) während des Ansaugens und Abgebens simuliert;
wobei die Zielfunktion von der Differenz (44) zwischen der simulierten Druckkurve (42) und der zweiten gemessenen Druckkurve (40) während des Ansaugens und Abgebens abhängig ist.

6. Verfahren nach einem der vorangehenden Ansprüche,
wobei die Zielfunktion von Druckunterschieden der gemessenen Druckkurve (40) und der simulierten Druckkurve (42) an gleichen Zeitpunkten abhängig ist.

7. Verfahren nach einem der vorangehenden Ansprüche,
wobei die physikalischen Eigenschaften der unbekannten Flüssigkeit (22) in einer einzigen mehrdimensionalen Optimierung bestimmt werden, in der die physikalischen Eigenschaften der Pipette (14) gleichzeitig variiert werden; oder
wobei die physikalischen Eigenschaften der unbekannten Flüssigkeit (22) in einer mehrstufigen Optimierung bestimmt werden, bei der die physikalischen Eigenschaften der Pipette (14) in separaten Gruppen aus einem oder mehreren Parametern variiert werden.

8. Verfahren nach einem der vorangehenden Ansprüche,
wobei mindestens ein Anfangswert für die physikalischen Parameter aus mindestens einem charakteristischen Merkmal (48, 50) der zweiten gemessenen Druckkurve (40) bestimmt wird;
wobei das mindestens eine charakteristische Merkmal (48, 50) umfasst:
eine Höhe und/oder Richtung einer Spitze an einem Beginn des Ansaugens;
eine Höhe und/oder Dauer einer Druckänderung an einem Ende des Ansaugens.

9. Verfahren nach einem der vorangehenden Ansprüche,
wobei die Pipette (14) unbenutzt ist und zuvor nicht mit einer Flüssigkeit (22, 252) benetzt wurde.

10. Verfahren nach einem der vorangehenden Ansprüche, des Weiteren umfassend:
Speichern der physikalischen Parameter der unbekannten Flüssigkeit (22) in einer Flüssigkeitsklasse für die unbekannte Flüssigkeit;
Durchführen eines Assay-Procederes mit der unbekannten Flüssigkeit (22) unter Verwendung der Flüssigkeitsklasse.

11. Computerprogramm zum Bestimmen physikalischer Parameter einer unbekannten Flüssigkeit, wobei das Computerprogramm, wenn es durch einen Prozessor und in einer Steuerungsvorrichtung (34) einer Laborautomatisierungsvorrichtung (10) ausgeführt wird, dazu ausgelegt ist, die Schritte des Verfahrens nach einem der vorhergehenden Ansprüche auszuführen.

12. Computerlesbares Medium, auf dem ein Computerprogramm nach Anspruch 11 gespeichert ist.

13. Steuerungsvorrichtung (34) einer Laborautomatisierungsvorrichtung (10), die dafür ausgelegt ist, das Verfahren nach einem der Ansprüche 1 bis 12 durchzuführen.

14. Laborautomatisierungsvorrichtung (10), umfassend:
einem Pipettierarm (12) zum Tragen einer Pipette (14);
eine Pumpe (26) zum Verändern eines Drucks in einem mit der Pipette (14) verbundenen Volumen (30);
einen Drucksensor (32) für Druckmessungen in dem mit der Pipette (14) verbundenen Volumen (30);
eine Steuerungsvorrichtung (34) zum Steuern der Pumpe (26) und des Pipettierarms (12) und zum Empfangen eines Drucksignals von dem Drucksensor (32);
wobei die Steuerungsvorrichtung (34) eine Steuerungsvorrichtung nach Anspruch 13 ist.

## Revendications

1. Procédé pour déterminer des paramètres physiques d'un liquide inconnu (22) devant être aspiré et/ou distribué par un dispositif d'automatisation de laboratoire (10), le procédé consistant à :
aspirer et/ou distribuer un liquide connu (25) avec une pipette (14) et mesurer une première courbe de pression mesurée (40) dans la pipette (14) pendant l'aspiration et/ou la distribution ;
déterminer des paramètres physiques de la pipette (14), les paramètres physiques incluant des paramètres géométriques de la pipette (14), qui incluent au moins un rayon d'extrémité d'un orifice de la pipette (15), dans lequel les paramètres physiques de la pipette (14) sont déterminés en minimisant une fonction objectif dépendant d'une différence (44) entre une courbe de pression simulée (42) et la première courbe de pression mesurée (40), dans lequel la courbe de pression simulée (42) simule une pression dans la pipette (14) pendant l'aspiration et/ou la distribution et est calculée sur la base d'un modèle physique du dispositif d'automatisation de laboratoire (10) incluant les paramètres physiques de la pipette (14) et les paramètres physiques connus du liquide connu (25), dans lequel on fait varier les paramètres physiques de la pipette (14) pour minimiser la fonction objectif ;
aspirer et/ou distribuer le liquide inconnu (22) avec une pipette (14) du dispositif d'automatisation de laboratoire et mesurer une deuxième courbe de pression mesurée (40) dans la pipette (14) pendant l'aspiration et/ou la distribution ;
déterminer les paramètres physiques du liquide inconnu (22) en minimisant la fonction objectif dépendant d'une différence (44) entre une courbe de pression simulée et la deuxième courbe de pression mesurée, dans lequel la courbe de pression simulée (42) simule une pression dans la pipette (14) pendant l'aspiration et/ou la distribution et est calculée sur la base du modèle physique du dispositif d'automatisation de laboratoire (10) incluant les paramètres physiques de la pipette (14), dans lequel on fait varier les paramètres physiques du liquide inconnu (22) pour minimiser la fonction objectif.

2. Procédé selon la revendication 1,
dans lequel le liquide connu (25) est aspiré avec une première pipette (14) et le liquide inconnu (22) est aspiré avec une deuxième pipette équivalente ;
dans lequel la pipette équivalente est une pipette de même forme que la pipette (14) ; et/ou
dans lequel la pipette (14) et la pipette équivalente sont prélevées dans le même conteneur de pipettes ; et/ou
dans lequel la pipette (14) et la pipette équivalente sont fabriquées à partir du même moule.

3. Procédé selon l'une des revendications précédentes,
dans lequel les paramètres géométriques de la pipette comprennent en outre au moins l'un des suivants : un modèle géométrique d'au moins une section conique modélisant une surface intérieure de la pipette (14) ; un angle d'ouverture d'une section conique aboutissant à l'orifice ; un deuxième rayon à une autre extrémité de la section conique ; une distance entre l'autre extrémité et l'orifice ; un angle d'ouverture et/ou des rayons et/ou des distances des extrémités d'autres sections coniques.

4. Procédé selon l'une des revendications précédentes,
dans lequel les paramètres physiques de la pipette (14) comprennent en outre une résistance de filtre ; et/ou
dans lequel les paramètres physiques du liquide inconnu (22) comprennent au moins l'un parmi une densité, une viscosité, une tension superficielle et un angle de mouillage.

5. Procédé selon l'une des revendications précédentes, consistant en outre à :
aspirer et distribuer le liquide inconnu (22) avec le dispositif d'automatisation de laboratoire (10) et mesurer la deuxième courbe de pression mesurée (40) pendant l'aspiration et la distribution ;
dans lequel la courbe de pression simulée (42) simule une pression dans la pipette (14) pendant l'aspiration et la distribution ;
dans lequel la fonction objectif dépend de la différence (44) entre la courbe de pression simulée (42) et la deuxième courbe de pression mesurée (40) pendant l'aspiration et la distribution.

6. Procédé selon l'une des revendications précédentes,
dans lequel la fonction objectif dépend des différences de pression entre la courbe de pression mesurée (40) et la courbe de pression simulée (42) à des instants égaux.

7. Procédé selon l'une des revendications précédentes,
dans lequel les propriétés physiques du liquide inconnu (22) sont déterminées dans une seule optimisation multidimensionnelle dans laquelle on fait varier simultanément les propriétés physiques de la pipette (14) ; ou
dans lequel les propriétés physiques du liquide inconnu (22) sont déterminées dans une optimisation à plusieurs étapes dans laquelle on fait varier les propriétés physiques de la pipette (14) dans des groupes séparés d'un ou plusieurs paramètres.

8. Procédé selon l'une des revendications précédentes,
dans lequel au moins une valeur initiale pour les paramètres physiques est déterminée à partir d'au moins une caractéristique (48, 50) de la deuxième courbe de pression mesurée (40) ;
dans lequel ladite au moins une caractéristique (48, 50) inclut :
une hauteur et/ou une direction d'un pic au début de l'aspiration ;
une hauteur et/ou une durée d'un changement de pression à la fin de l'aspiration.

9. Procédé selon l'une des revendications précédentes,
dans lequel la pipette (14) est inutilisée et n'a pas été humidifiée avec un liquide (22, 25) auparavant.

10. Procédé selon l'une des revendications précédentes, consistant en outre à :
stocker les paramètres physiques du liquide inconnu (22) dans une classe de liquides pour le liquide inconnu ;
réaliser une procédure d'analyse avec le liquide inconnu (22) en utilisant la classe de liquide.

11. Programme informatique pour déterminer des paramètres physiques d'un liquide inconnu, lequel programme informatique, lorsqu'il est exécuté par un processeur et dans un dispositif de commande (34) d'un dispositif d'automatisation de laboratoire (10), est adapté à mettre en œuvre les étapes du procédé selon l'une des revendications précédentes.

12. Support lisible par ordinateur, dans lequel est stocké un programme informatique selon la revendication 11.

13. Dispositif de commande (34) d'un dispositif d'automatisation de laboratoire (10) adapté à exécuter le procédé selon l'une des revendications 1 à 12.

14. Dispositif d'automatisation de laboratoire (10), comprenant :
un bras de pipetage (12) pour porter une pipette (14) ;
une pompe (26) pour changer une pression dans un volume (30) relié à la pipette (14) ;
un capteur de pression (32) pour des mesures de pression dans le volume (30) relié à la pipette (14) ;
un dispositif de commande (34) pour commander la pompe (26) et le bras de pipetage (12) et pour recevoir un signal de pression provenant du capteur de pression (32) ;
dans lequel le dispositif de commande (34) est réalisé selon la revendication 13.
